(19) Europäisches Patentamt
European Patent Office
Office européen des brevets

(11) EP 2 933 391 A1

(12) EUROPÄISCHE PATENTANMELDUNG

(43) Veröffentlichungstag:
21.10.2015 Patentblatt 2015/43

(51) Int Cl.:
*E03F 5/14* (2006.01)       *E02B 7/00* (2006.01)

(21) Anmeldenummer: 15157432.4

(22) Anmeldetag: 03.03.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA

(30) Priorität: 20.03.2014   DE 102014103865

(71) Anmelder: Rudolf Bischof GmbH Technische
Handelsvertretung Abwassertechnik
85378 Eching (DE)

(72) Erfinder: Bischof, Rudolf
85386 Eching (DE)

(74) Vertreter: Flügel Preissner Kastel Schober
Patentanwälte PartG mbB
Nymphenburger Strasse 20a
80335 München (DE)

(54) **Verfahren und Vorrichtung zum Verändern eines Pegelstands sowie Verwendungen derselben bei der Trennung von Feststoffen von Flüssigkeiten**

(57)    Die Erfindung betrifft ein Verfahren zum Verändern des Pegelstands in einem Gerinne (10) im Bereich einer Sieb- oder Recheneinrichtung (18), die durch eine Flüssigkeit zum Absondern von Feststoff daraus durchströmt wird, mit: Anordnen eines Staukörpers (28) in Strömungsrichtung hinter der Sieb- oder Recheneinrichtung (18) mit seitlichem Abstand zu beiden Gerinneseitenwänden (12, 14).

FIG 1

EP 2 933 391 A1

**Beschreibung**

Die Erfindung betrifft ein Verfahren zum Verändern des Pegelstands in einem Gerinne im Bereich einer Sieb- oder Recheneinrichtung. Weiter betrifft die Erfindung ein Trennverfahren zum Absondern von Feststoffen aus einer Flüssigkeitsströmung unter Verwendung eines solchen Verfahrens zur Pegelstandsveränderung. Weiter betrifft die Erfindung eine Pegelstandsveränderungsvorrichtung zum Verändern des Pegelstands in einem Gerinne. Schließlich betrifft die Erfindung eine Trennvorrichtung zum Absondern von Feststoffen aus einer Flüssigkeitsströmung, die eine solche Pegelstandsveränderungsvorrichtung aufweist.

Aus der DE 1 297 039 ist ein durch ein Druckmittel aufblähbares Schlauchwehr zum Stau von Gerinnen oder Kanälen bekannt, bei dem besondere Maßnahmen zum dichtenden Verbinden des Schlauchwehrs mit Wandungen oder Böschungen des Gerinnes in jeder Stellung des Schlauchwehres getroffen sind.

Die Erfindung ist insbesondere anwendbar zum Einstellen des Pegelstands im Bereich einer Sieb- oder Recheneinrichtung, wie sie z.B. bei oder in Klärwerken zum Absondern von Feststoffen aus einer Abwasserströmung einzusetzen sind.

Abwässer, die in einer Kläranlage ankommen, sind meist mit einer erheblichen Anzahl von Feststoffen versehen, die im Verlauf der Abwasserreinigung aus dem Abwasser zu entfernen sind. Hierzu gibt es Sieb- oder Recheneinrichtungen, wie sie beispielsweise aus der EP 1 161 292 B1, der DE 10 2007 035 081 A1, der DE 10 2010 034 098 A1 oder der DE 10 2011 082 629 A1 bekannt sind. Zum Beispiel weist die Sieb- oder Recheneinrichtung einen Gitterrost oder dergleichen Sieb zum mechanischen Aussieben der Feststoffe aus dem durchströmenden Flüssigkeitsstrom auf.

Bei der EP 1 161 292 B1 ist in Strömungsrichtung hinter der Siebrecheneinrichtung eine Tauchpumpe in dem Gerinne vorgesehen.

Aus der DE 29 21 922 C2 ist ein Rechen zur Abwasserreinigung für Kläranlagen bekannt, der einen in einem Durchfluss angeordneten Stabrechen mit einer Rechenharke hat. Zum Reinigen des Rechens kann der Rechenharken mittels eines Drehkrans von einer herausgehobenen Stellung entgegen der Strömungsrichtung an der Sohle in den Rechen eingeführt werden und dann nach oben herausgehoben werden. An dem Rechenharken ist eine erste Druckplatte vorgesehen, die entsprechend beim Herausheben mit dem Rechenharken in das Gerinne eingeführt wird. Diese Druckplatte wird mit dem herausgehobenen Rechengut gegen eine stationäre weitere Druckplatte oberhalb des Gerinnes verfahren, um Wasser aus dem Rechengut herauszupressen.

Aufgabe der Erfindung ist es, ein Verfahren und eine Vorrichtung zur Verbesserung der Funktion einer Sieb- oder Recheneinrichtung, die in ein Gerinne eingefügt ist, zu schaffen.

Diese Aufgabe wird mit den Verfahren und Vorrichtungen gemäß den unabhängigen Ansprüchen gelöst.

Vorteilhafte Ausgestaltungen der Erfindung sind Gegenstand der Unteransprüche.

Die Erfindung schafft gemäß einem ersten Aspekt davon ein (Pegelstandsveränderungs-)Verfahren zum Verändern des Pegelstands in einem Gerinne im Bereich einer Sieb- oder Recheneinrichtung, die durch eine Flüssigkeit zum Absondern von Feststoff daraus durchströmt wird, mit: Einstellen des Pegelstands des Unterwassers hinter der Sieb- oder Recheneinrichtung durch Anordnen eines Staukörpers in Strömungsrichtung hinter der Sieb- oder Recheneinrichtung mit seitlichem Abstand zu beiden Gerinneseitenwänden.

In einem Gerinne mit einer derartigen Sieb- oder Recheneinrichtung oder Sieb-oder Rechenanlage, welches von einem Feststoff-Flüssigkeitsgemisch durchströmt wird, ist es häufig von Vorteil, wenn der Pegelstand hinter der Sieb- oder Recheneinrichtung oder Sieb- oder Rechenanlage (Pegel des sogenannten Unterwassers oder kurz "Unterwasserpegel") angehoben wird.

Zum Beispiel könnte sich aufgrund der baulichen Bedingungen - z.B. in einer Kläranlage - unmittelbar hinter der Sieb- oder Recheneinrichtung ein abschüssiges Gefälle befinden, das zu einem zu niedrigen Unterwasserpegel führt. Ein solcher zu niedriger Unterwasserpegel bringt Nachteile für die Trennleistung der Siebstrukturen. Es ist daher wünschenswert, den Pegel im Bereich der Siebstruktur möglichst hoch zu halten. Andererseits können sich bei einem hohen Pegel Ablagerungen im Oberwasserbereich vor der Sieb- oder Rechenanlage aufbauen.

Vorteilhaft wird demnach ein Verfahren zur Veränderung des Pegelstands im Bereich der Sieb- oder Recheneinrichtung geschaffen, das derart ausgebildet ist, dass Feststoffe an der Sieb- oder Recheneinrichtung besser zurückgehalten werden und dennoch die Gefahr von Ablagerungen in dem Gerinne in Strömungsrichtung vor der Sieb- oder Recheneinrichtung verringert ist.

Vorzugsweise wird weiter eine Vorrichtung zum Durchführen des Verfahrens geschaffen.

Vorzugsweise umfasst das Pegelstandsveränderungsverfahren den Schritt: Aufteilen der Flüssigkeitsströmung durch den Staukörper in wenigstens einen ersten und einen zweiten Teilstrom derart, dass der erste Teilstrom zwischen dem Staukörper und der einen Seitenwand des Gerinnes und der zweite Teilstrom zwischen dem Staukörper und der anderen Seitenwand des Gerinnes an dem Staukörper vorbei fließt.

Vorzugsweise umfasst das Pegelstandsveränderungsverfahren den Schritt:

Verändern eines zum Stauen wirksamen Querschnitts und/oder des Volumens des Staukörpers.

Vorzugsweise umfasst das Pegelstandsveränderungsverfahren den Schritt: Verwenden eines mittels eines Fluiddrucks ausdehnbaren Staukörpers und Verändern des Fluiddrucks.

Vorzugsweise umfasst das Pegelstandsveränderungsverfahren den Schritt: Verwenden eines Staukörpers mit in unterschiedlichen Orientierungen unterschiedlichem wirksamen Stauquerschnitt und Ändern der Orientierung.

Vorzugsweise umfasst das Pegelstandsveränderungsverfahren den Schritt: mittiges Anordnen des Staukörpers in dem Gerinne.

Vorzugsweise umfasst das Pegelstandsveränderungsverfahren den Schritt: Anordnen des Staukörpers in einem Bereich von ca. 50 cm bis ca. 3 m (in Strömungsrichtung) hinter der Sieb- oder Recheneinrichtung.

Gemäß einem weiteren Aspekt schafft die Erfindung ein Trennverfahren zum Absondern von Feststoffen aus einer Flüssigkeitsströmung mit:

Leiten der Flüssigkeitsströmung durch eine in einem Gerinne eingesetzte Sieb-oder Recheneinrichtung und Durchführen des Pegelstandsveränderungsverfahrens gemäß einer der voranstehenden Ausgestaltungen zum Einstellen des Pegels der Flüssigkeit im Bereich der Sieb- oder Recheneinrichtung.

Gemäß einem weiteren Aspekt schafft die Erfindung eine Pegelstandsveränderungsvorrichtung zum Verändern des Pegelstands in einem Gerinne im Bereich einer Sieb- oder Recheneinrichtung, die durch eine Flüssigkeit zum Absondern von Feststoff daraus durchströmt wird, mit:

einem Staukörper und einer Befestigungseinrichtung zum Befestigen des Staukörpers in Strömungsrichtung hinter der Sieb- oder Recheneinrichtung entfernt von den Seitenwänden des Gerinnes, um die Flüssigkeitsströmung durch den Staukörper in wenigstens einen ersten und einen zweiten Teilstrom derart aufzuteilen, dass der erste Teilstrom zwischen dem Staukörper und der einen Seitenwand des Gerinnes und der zweite Teilstrom zwischen dem Staukörper und der anderen Seitenwand des Gerinnes an dem Staukörper vorbei fließt.

Gemäß einer ersten Alternative ist vorgesehen, dass der Staukörper zur Veränderung des wirksamen Stauquerschnitts formveränderlich und/oder lageveränderlich ist.

Es ist bevorzugt, dass der Staukörper mittels Einstellung eines Fluiddrucks im Inneren ausdehnbar oder zusammenziehbar ist und dass die Pegelstandsveränderungsvorrichtung eine Fluiddruckeinstelleinrichtung zum Einstellen des Fluiddrucks im Inneren des Staukörpers aufweist.

Gemäß einer zweiten Alternative ist vorgesehen, dass der Staukörper eine Form mit in unterschiedlichen Lagen und/oder Orientierungen unterschiedlichem wirksamen Stauquerschnitt hat und dass die Befestigungseinrichtung einstellbar ist, um die Lage und/oder Orientierung des Staukörpers zwecks Veränderung des wirksamen Stauquerschnitts zu verändern.

Gemäß einem weiteren Aspekt schafft die Erfindung eine Trennvorrichtung zum Absondern von Feststoffen aus einer Flüssigkeitsströmung mit einer Pegelstandsveränderungsvorrichtung nach einer der zuvor erläuterten Ausgestaltungen und mit einer in dem Gerinne anzuordnenden Sieb- oder Recheneinrichtung.

Im Folgenden werden Vorteile und besondere Merkmale bevorzugter Ausgestaltungen der Erfindung näher erläutert.

Ein zu niedriger Unterwasserpegel in Strömungsrichtung nach einer Sieb- oder Recheneinrichtung oder Sieb-oder Rechenanlage bringt folgende Nachteile:

1. Die Sieb- oder Rechenanlage hat eine geringere hydraulische Durchsatzleistung, da die durchströmte projizierte Fläche ausschlaggebend für die Durchsatzmenge ist.

2. Aufgrund der hohen Wasserstandsdifferenz zwischen Oberwasserpegel und Unterwasserpegel kommt es zu hohen Fließgeschwindigkeiten zwischen den Stäben bzw. in der durchströmten Fläche. Hohe Fließgeschwindigkeiten haben zur Folge, dass viele Feststoffe, welche bei niedrigeren Geschwindigkeiten zurückgehalten werden können, durch die Sieblöcher oder Siebspalten gepresst werden. Die Abscheideleistung einer Sieb- oder Recheneinrichtung verschlechtert sich dadurch.

Durch die hier bevorzugt vorgeschlagenen Verfahren und Vorrichtungen lassen sich diese Nachteile durch Anpassung des Pegelstands im Bereich in Strömungsrichtung hinter der Sieb- oder Recheneinrichtung mittels eines Staukörpers vermeiden.

Es wäre nun zunächst denkbar, die beispielsweise aus der Praxis zur Messung von Durchflussleistungen in Gerinnen an sich bereits bekannten sogenannten "Venturi-Einschnürungen" vorzusehen, wo die Seitenwände der Gerinne aneinander angenähert werden, um eine Einschnürung in dem Gerinne vorzusehen.

Nachteil einer sogenannten Venturi-Einschnürung ist jedoch, dass sich Ablagerungen im Oberwasserbereich vor der Sieb- oder Recheneinrichtung aufbauen. Ablagerungen vor Sieb- oder Rechenanlagen oder Sieb- oder Recheneinrichtungen beginnen sich an den Ecken zwischen Gerinnesohle und Gerinnewänden aufzubauen, weil dort die größte Reibung und demzufolge die geringste Strömungsgeschwindigkeit herrscht. Wenn nun noch Staukörper an den Gerinneseitenwänden hinter der Sieb- oder Recheneinrichtung befestigt sind oder die Gerinneseitenwände selbst als derartige Staukörper ausgebildet sind, wird die Strömungsgeschwindigkeit an den Seitenwänden vor der Sieb- oder Recheneinrichtung nochmals reduziert, was die Bildung von Ablagerungen zusätzlich verstärkt. In einem solchen Fall würden sich nach internen Untersuchungen an der Gerinnesohle vor der Siebeinrichtung oder Recheneinrichtung richtige "Sandbänke" an den Gerinnesohleseiten ausbilden. Daher wird bei einer bevorzugten Ausgestaltung vorgeschlagen, einen Staukörper nicht an den Gerinneseitenwänden anzubringen, sondern mit Abstand zu beiden Gerinneseitenwänden. Die Flüssigkeit fließt dann zwischen dem Staukörper und den Gerinneseitenwänden ab. Hierdurch wird die Fließgeschwindigkeit an den Gerinneseitenwänden nicht verringert, sondern vielmehr noch erhöht.

Gemäß einem bevorzugten Ausführungsbeispiel wird ein Staukörper in der Gerinnemitte unmittelbar hinter einer Sieb- oder Recheneinrichtung eingebaut.

Vorteile besonderer Ausgestaltungen sind, dass die Strömungsgeschwindigkeit an den Gerinneseitenwänden erhöht wird und sich keine Ablagerungen oder wenige Ablagerungen im Oberwasserpegelbereich bilden. Außerdem wird durch den höheren Unterwasserpegel die hydraulische Durchsatzleistung des Rostes oder der sonstigen Siebeinrichtung oder Recheneinrichtung erhöht.

Vorzugsweise ist der Staukörper ein Staukörper, der im Durchmesser und/oder in der Geometrie automatisch oder manuell verändert werden kann. Damit kann der wirksame Stauquerschnitt eingestellt werden, um so den Pegelstand und/oder die Fließgeschwindigkeiten zu beeinflussen und/oder zu verändern. Hierdurch können optimale Bedingungen erreicht werden.

Bei einer Ausgestaltung wird hierzu ein Staukörper verwendet, der durch Veränderungen eines Fluiddrucks im Inneren ausgedehnt oder zusammengezogen werden kann.

Zum Beispiel kann eine sogenannte Kanalabsperrblase, die luftgefüllt oder wassergefüllt oder luft- und wassergefüllt werden kann, vertikal zur Fließrichtung mit Abstand zu beiden Gerinneseitenwänden - z.B. in der Kanalmitte - hinter der Sieb- oder Recheneinrichtung eingebaut.

Durch Luftzugabe oder Wasserzugabe oder Luftentnahme oder Wasserentnahme wird der Durchmesser vergrößert oder verkleinert.

Die Vergrößerung bzw. Verkleinerung kann z.B. nur manuell oder z.B. automatisch erfolgen. Hierzu können z.B. Kanalabsperrsysteme bzw. Rohrverschlüsse eingesetzt werden, die zur Steuerung solcher Kanalabsperrblasen im Handel sind.

Nimmt man z.B. einen - z.B. von der Anmelderin erhältlichen - Rohrverschluss vom Typ RVD NV 400-1000, kann man mit diesem Verschluss die durchströmte Gerinnebreite von 40 cm bis 100 cm verkleinern.

Bei einem Gerinne mit einer Gesamtbreite von 140 cm kann man mit einem derartigen Rohrverschluss die durchströmte Breite von 140 cm auf 100 cm bis 40 cm stufenlos verändern.

Bei einer anderen vorteilhaften Ausgestaltung wird ein Staukörper verwendet, der bei unterschiedlicher Orientierung oder unterschiedlicher Lage unterschiedliche Stauquerschnitte bietet. Zum Beispiel kann ein dreieckiger Staukörper in der Gerinnemitte montiert werden. Ein solcher dreieckiger Staukörper kann optional mit einem Scharnier an der Anströmspitze befestigt werden und mit einer motorbetriebenen oder hydraulischen Stelleinheit zur Veränderung des Anströmwinkels versehen werden.

Alternativ zu dem dreieckigen Staukörper könnte z.B. auch ein pyramidenförmiger Staukörper eingesetzt werden.

Ein Ausführungsbeispiel der Erfindung wird nachfolgend anhand der beigefügten Zeichnung näher erläutert. Darin zeigt:

Fig. 1      einen Längsquerschnitt in Strömungsrichtung gesehen durch ein Gerinne, in das eine Trennvorrichtung zum Trennen von Feststoffen aus einem durch das Gerinne fließenden Flüssigkeitsstrom eingesetzt ist, wobei die Trennvorrichtung mit einer Sieb- oder Recheneinrichtung und einer Pegelstandsveränderungsvorrichtung versehen ist;

Fig. 2      eine Draufsicht auf das mit der Trennvorrichtung versehene Gerinne von Fig. 1;

Fig. 3      eine schematische Darstellung des Gerinnes mit Oberwasserpegel, Siebrost und Unterwasserpegel zur Darstellung der Größen für eine hydraulische Berechnung;

Fig. 4      einen Graph zur Verdeutlichung des Flüssigkeitsdurchlasses als Funktion des Höhenunterschiedes zwischen Oberwasserpegel und Unterwasserpegel bei einer Höhe des Unterwasserpegels von 0,95 m;

Fig.5      einen Graph für die Geschwindigkeit zwischen den Stäben des Siebrostes von Fig. 3 als Funktion von dem Höhenunterschied zwischen Oberwasserpegel und Unterwasserpegel bei einem Unterwasserpegel von 0,95 m;

Fig. 6     einen Graph wie in Fig. 4, jedoch bei einem Unterwasserpegel von 0,3 m;

Fig. 7     einen Graph wie in Fig. 5, jedoch bei einem Unterwasserpegel von 0,3 m;

Fig. 8     ein Sortiment möglicher Staukörper ohne Querschnittsveränderungseinrichtung; und

Fig. 9     ein Sortiment möglicher Staukörper, die durch eine Querschnittsveränderungseinrichtung im Querschnitt veränderbar sind.

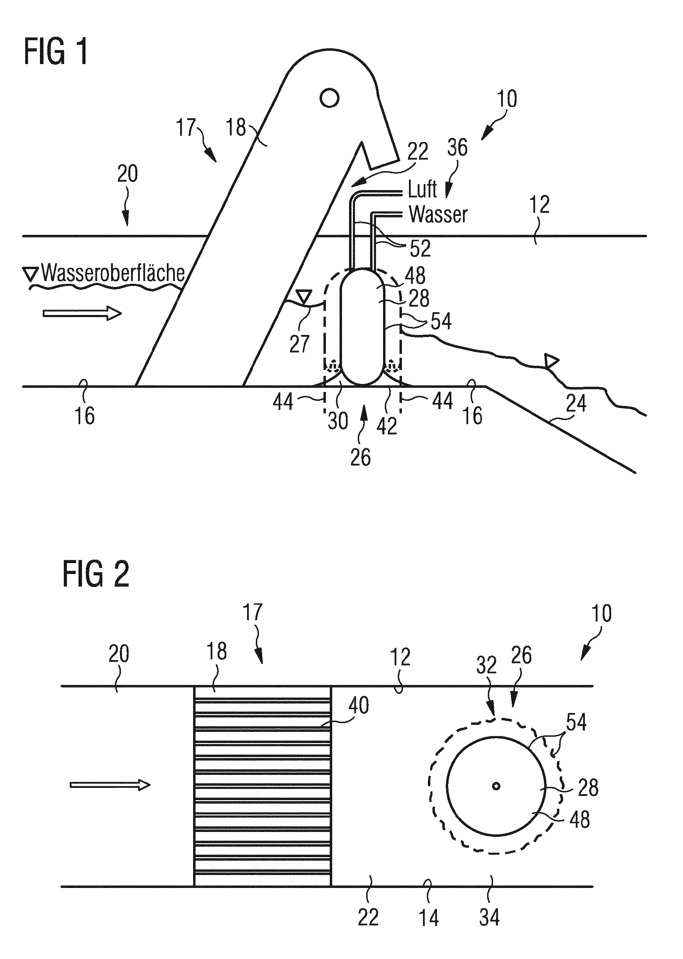

In den Fig. 1 und 2 ist ein Gerinne 10 dargestellt, mit dem z.B. Abwässer einer nicht näher dargestellten Kläranlage zugeführt werden. Das Gerinne 10 ist links und rechts durch Seitenwände 12, 14 und unten durch einen Boden 16 begrenzt. Zur Absonderung von mit den Abwässern heranströmenden Feststoffen ist eine Trennvorrichtung 17 an dem Gerinne 10 vorgesehen. Die Trennvorrichtung 17 weist eine Sieb- oder Recheneinrichtung 18 auf. Als Sieb- oder Recheneinrichtung 18 ist beispielsweise eine Siebrechenvorrichtung eingesetzt, wie sie in der DE 10 2011 082 629 A1 beschrieben und gezeigt ist. Demnach weist die Sieb- oder Recheneinrichtung 18 ein Siebgitter 40 mit Gitterstäben oder dergleichen Siebeinrichtung (z.B. Lochblech) auf.

Der Bereich des Gerinnes 10 in Strömungsrichtung vor der Sieb- oder Recheneinrichtung 18 wird als Oberwasser 20 bezeichnet und der Bereich des Gerinnes 10 in Strömungsrichtung nach der Sieb- oder Recheneinrichtung 18 wird als Unterwasser 22 bezeichnet.

Das Gerinne 10 weist im Bereich des Unterwassers 22 ein Gefälle 24 auf, über welches die von den Feststoffen durch die Sieb- oder Recheneinrichtung 18 zumindest teilweise gereinigte Flüssigkeit zu weiteren Stufen der Kläranlage geleitet wird.

Die Trennvorrichtung 17 weist weiter eine Pegelstandsveränderungsvorrichtung 26 zum Verändern des Pegelstands 27, Hu in dem Unterwasser 22 auf.

Die Pegelstandsveränderungsvorrichtung 26 weist einen Staukörper 28 auf, der mittels einer Befestigungseinrichtung 30 in einem Bereich von ca. 50 cm bis etwa 3 m in Strömungsrichtung hinter der Sieb- oder Recheneinrichtung 18 in dem Gerinne 10 befestigt ist.

Die Befestigungseinrichtung 30 ist derart ausgebildet, dass der Staukörper 28 sowohl mit Abstand von der ersten Seitenwand 12 als auch mit Abstand von der zweiten Seitenwand 14 angeordnet ist, so dass der Staukörper 28 den Flüssigkeitsstrom in einem ersten Teilstrom 32 zwischen dem Staukörper 28 und der ersten Seitenwand 12 und in einem zweiten Teilstrom 34 zwischen dem Staukörper 28 und der zweiten Seitenwand 14 aufteilt.

Die Befestigungseinrichtung 30 weist beispielsweise eine Befestigungsplatte 42 und Schrauben 44 auf, mit dem der Staukörper 28 am Boden 16 des Gerinnes 10 befestigt ist.

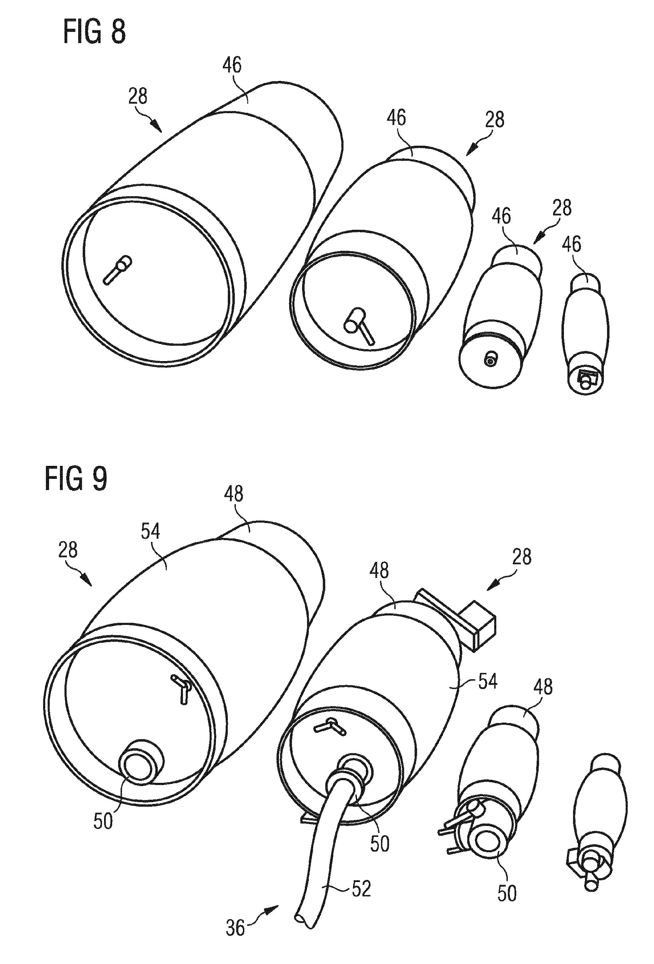

Beispiele für mögliche Staukörper 28 sind in den Fig. 8 und 9 gezeigt. Als Staukörper 28 werden bevorzugt Körper verwendet, die als Rohrverschlüsse 46 konzipiert worden sind. Fig. 8 zeigt Rohrverschlüsse 46 verschiedener Größe ohne gesonderte Querschnittseinstellung. Fig. 9 zeigt bevorzugt als Staukörper 28 zu verwendende Rohrverschlüsse 48, die einen Anschluss 50 aufweisen, an die ein Druckfluidschlauch 52 anschließbar ist. Durch Einleiten eines unter Druck stehenden Fluids - z.B. Luft oder Wasser - lässt sich das Volumen des Rohrverschlusses 48 verändern.

Der Staukörper 28 ist somit bevorzugt mit einer flexiblen Außenhülle 54 versehen und lässt sich durch Einleiten von Fluid, wie z.B. Luft und/oder Wasser, in seinem Durchmesser verändern. Hierdurch lässt sich der wirksame Stauquerschnitt des Staukörpers 28 verändern. Hierzu ist eine Fluiddruckeinstelleinrichtung 36 vorgesehen, mittels der der Fluiddruck im Inneren des Staukörpers 28 eingestellt werden kann, um eine entsprechende Durchmesserveränderung durchzuführen. Hierdurch lassen sich die Strömungsquerschnitte des ersten Teilstroms 32 und des zweiten Teilstroms 34 vergrößern oder verkleinern.

Als Staukörper 28 ist bevorzugt ein Rohrverschluss 48 vom Typ RVD NV 400-1000 eingesetzt. Derartige Rohrverschlüsse 48 sind zu einem anderen Zweck, nämlich zum Absperren und Abdichten von Rohren bereits unter anderem von der Anmelderin im Handel erhältlich. Derartige bereits im Handel erhältliche Rohrverschlüsse 46, 48 können mit einer Fluiddruckeinstelleinrichtung 36 erhalten werden, um den Durchmesser zu verändern.

Durch die Verwendung des Staukörpers 28 lässt sich der Pegelstand 27 des Unterwassers 22 - Unterwasserpegel - erhöhen, wobei gleichzeitig die Strömungsgeschwindigkeit im Bereich der Seitenwände 12, 14 erhöht wird.

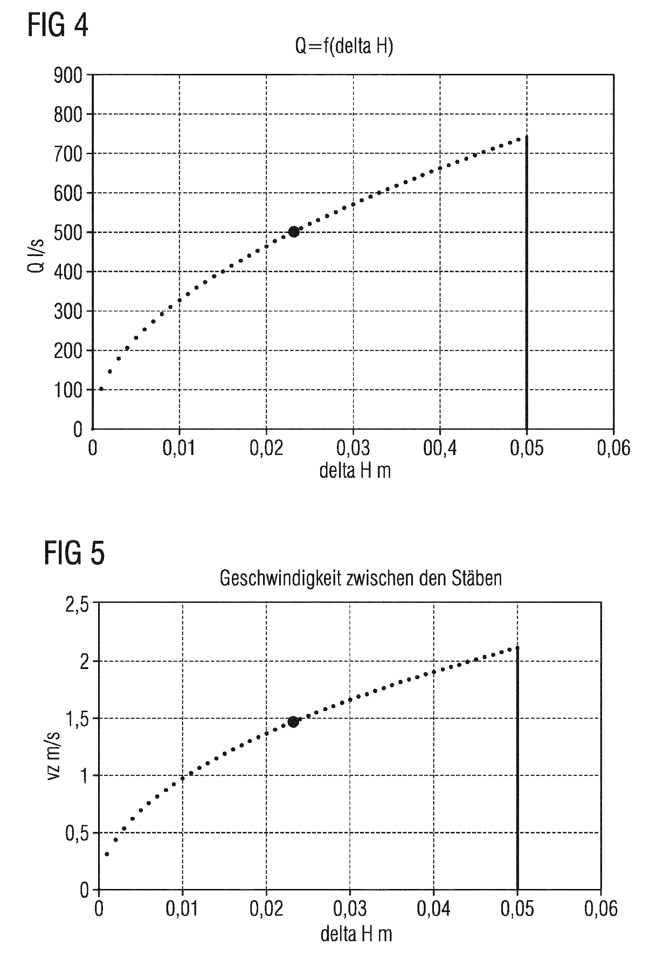

Im Folgenden werden die Wirkungen des Aufstauens des Unterwasserpegels anhand von Beispielrechnungen mit Bezug auf die Fig. 5 bis 7 näher erläutert.

Wie sich aus den folgenden Beispielrechnungen für ein konstantes Unterwasser 22 von 0,95 m einerseits und 0,3 m andererseits und den entsprechenden Graphen in den Fig. 5 bis 7 ergibt, lässt sich durch eine Erhöhung des Unterwasserpegels nicht nur die Durchsatzfläche durch das Siebgitter 40 vergrößern und somit die Durchsatzmenge vergrößern, sondern gleichzeitig die Geschwindigkeit zwischen den Stäben des Siebgitters 40 verringern. Dadurch, dass man den Staukörper 28 beispielsweise mittig einsetzt, so dass die Strömungsgeschwindigkeiten im Bereich der Seitenwände 12, 14 erhöht werden, lässt sich dies erreichen, ohne dass die Gefahr von Ablagerungen im Oberwasser 20 erhöht wird.

1. Beispielrechnung für ein konstantes Unterwasser Hu = 0,95 m:

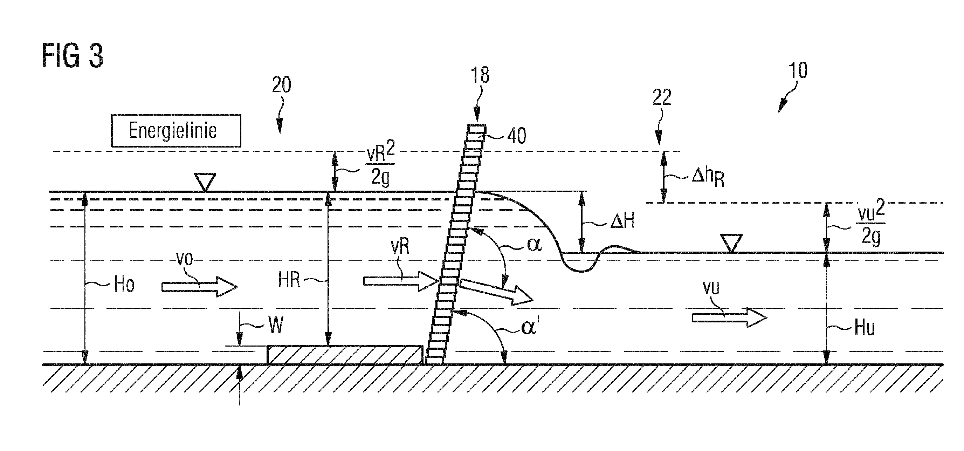

Mit den in Fig. 3 graphisch dargestellten, im Folgenden beispielhaft in Tabelle 1 wiedergegebenen Werten ergeben sich folgende Größen für die Oberwasserhöhe, die Wasserhöhendifferenz und die Energiedifferenz für einen Unterwasserpegel Hu von 0,95 m.

Die Berechnungen erfolgen anhand der folgenden Formeln:

Energieverlust nach Kirschmer:

$$\Delta h_R = \frac{k_f}{2 \cdot g} \left( \frac{s}{a} \right)^{\frac{4}{3}} \cdot \sin \alpha \cdot v_R^{\,2} \qquad \Delta h_R = H_o + \frac{v_R^2}{2g} - H_u - \frac{v_u^2}{2g}$$

Wasserstandsunterschied ΔH mit Belegung B in %:

$$\Delta H = H_o - H_u = \frac{k_f}{2g} \left( \frac{B/100 + s/a}{1 - B/100} \right)^{\frac{4}{3}} \cdot \sin \alpha \cdot v_R^2 - \frac{v_R^2}{2g} + \frac{v_u^2}{2g}$$

Tabelle 1:

| | | | | | |
|---|---|---|---|---|---|
| | Durchflussmenge | Q | 500 | l/s | gefordert |
| | Belegung | B | 30 | % | |
| | Gerinnebreite | Breite | 1,000 | m | |
| | Seitenrahmenbreite | SB | 0,000 | m | |
| | Unterwassertiefe | Hu | 0,950 | m | konstant |
| | Sohlsprung | W | 0,000 | m | |
| | Max. Oberwasser | $HO_{max}$ | 1,000 | m | Obergrenze |
| | Stabstärke | S | 6 | mm | |
| | Stababstand | a | 6 | mm | |
| | Formbeiwert $k_F$ oder | β | 0,76 | - | |
| | Neigungswinkel | α | 75 | ° | 1,0 |
| | | | Berechnen | | Oberwasser-Berechnung Berechnung in mm Schritten |
| Ergebnis -> | **Oberwasserhöhe** | **Ho** | **0,973** | **m** | |
| | Wasserhöhendifferenz | ΔH = | **2,32** | **cm** | |
| | Energiedifferenz | $\Delta h_R$ = | 2,25 | cm | |
| | **Stabanzahl** | **n =** | **83** | | |
| | Rechenfeldbreite | Br = | 1,000 | m | |
| | durchströmte Rechen-Breite | | 0,5020 | m | |
| | freie Fläche bei Ho **ohne B** | $A_{frei}$ | 0,4885 | $m^2$ | |
| | Geschwindigkeit | **VZ =** | **1,023** | **m/s** | zwischen den Rechenstäben! |
| | freie Fläche bei Belegung **B** | 0,7 | 0,3420 | $m^2$ | |
| | vz bei Belegung | **$VZ_B$ =** | **1,462** | **m/s** | zwischen den Rechenstäben! |
| | Geschwindigkeit vorm Rechen | $V_R$ | 0,514 | m/s | im Oberwasser |
| | Geschwindigkeit im UnterW. | VU | 0,526 | m/s | im Unterwasser |

(fortgesetzt)

| | | | |
|---|---|---|---|
| Abstand zur max. Höhe | | 2,68 | cm |

## 2. Beispielrechnung für ein konstantes Unterwasser Hu = 0,3:

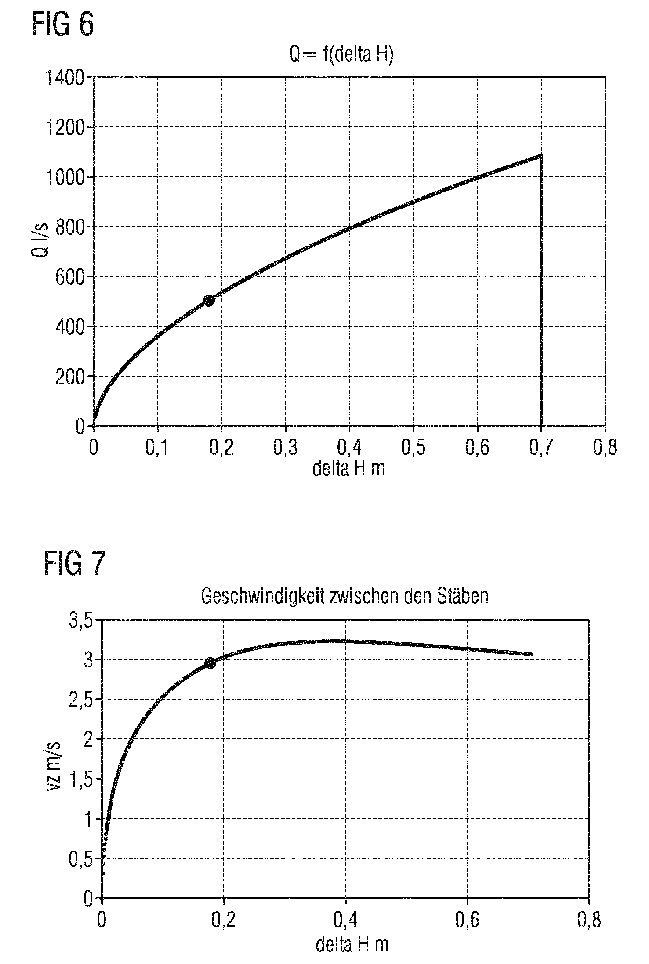

Tabelle 2 gibt die gleiche Berechnung für einen niedrigeren Unterwasserpegel Hu von 0,3 m an. Man erkennt durch einen Vergleich, dass sich durch Erhöhung des Unterwasserpegels eine niedrigere Geschwindigkeit zwischen den Stäben des Siebgitters 40 - siehe auch Vergleich der Graphen Fig. 4 und 5 einerseits mit Fig. 6 und 7 andererseits - und eine bessere Ausnutzung der Siebfläche ergibt.

<div align="center">Tabelle 2:</div>

| | | | | | |
|---|---|---|---|---|---|
| | Durchflussmenge | Q | 500 | l/s | gefordert |
| | Belegung | B | 30 | % | |
| | Gerinnebreite | Breite | 1,000 | m | |
| | Seitenrahmenbreite | SB | 0,000 | m | |
| | Unterwassertiefe | Hu | 0,300 | m | konstant |
| | Sohlsprung | W | 0,000 | m | |
| | Max. Oberwasser | $HO_{max}$ | 1,000 | m | Obergrenze |
| | Stabstärke | S | 6 | mm | |
| | Stababstand | a | 6 | mm | |
| | Formbeiwert $k_F$ oder | β | 0,76 | - | |
| | Neigungswinkel | α | 75 | ° | 1,0 |
| | | | Berechnen | | Oberwasser-Berechnung<br>Berechnung in mm Schritten |
| Ergebnis -> | **Oberwasserhöhe** | **Ho** | **0,479** | **m** | |
| | Wasserhöhendifferenz | $\Delta H =$ | **17,88** | **cm** | |
| | Energiedifferenz | $\Delta h_R =$ | 9,32 | cm | |
| | **Stabanzahl** | **n =** | **83** | | |
| | Rechenfeldbreite | Br = | 1,000 | m | |
| | durchströmte Rechen-Breite | | 0,5020 | m | |
| | freie Fläche bei Ho **ohne B** | $A_{frei}$ | 0,2403 | $m^2$ | |
| | Geschwindigkeit | **vz =** | **2,080** | **m/s** | zwischen den Rechenstäben! |
| | freie Fläche bei Belegung **B** | 0,7 | 0,1682 | $m^2$ | |
| | vz bei Belegung | **$VZ_B =$** | **2,972** | **m/s** | zwischen den Rechenstäben! |
| | Geschwindigkeit vorm Rechen | $V_R=$ | 1,044 | m/s | im Oberwasser |
| | Geschwindigkeit im UnterW. | VU = | 1,667 | m/s | im Unterwasser |
| | Abstand zur max. Höhe | | 52,12 | cm | |

**Bezugszeichenliste:**

10   Gerinne
12   erste Seitenwand
14   zweite Seitenwand
16   Boden
17   Trennvorrichtung
18   Sieb- oder Recheneinrichtung
20   Oberwasser
22   Unterwasser
24   Gefälle

26 Pegelstandsveränderungsvorrichtung
27 Pegelstand
28 Staukörper
30 Befestigungseinrichtung
32 erster Teilstrom
34 zweiter Teilstrom
36 Fluiddruckeinstelleinrichtung
40 Siebgitter
42 Befestigungsplatte
44 Schrauben
46 Rohrverschluss
48 Rohrverschluss mit veränderlichem Querschnitt
50 Anschluss
52 Druckfluidschlauch
54 Außenhülle

**Patentansprüche**

1. Verfahren zum Verändern des Pegelstands in einem Gerinne (10) im Bereich einer Sieb- oder Recheneinrichtung (18), die durch eine Flüssigkeit zum Absondern von Feststoff daraus durchströmt wird, mit:

   Einstellen des Pegelstands des Unterwassers hinter der Sieb- oder Recheneinrichtung durch Anordnen eines Staukörpers (28) in Strömungsrichtung hinter der Sieb- oder Recheneinrichtung (18) mit seitlichem Abstand zu beiden Gerinneseitenwänden (12, 14).

2. Verfahren nach Anspruch 1,
   **gekennzeichnet durch**
   Aufteilen der Flüssigkeitsströmung **durch** den Staukörper (28) in wenigstens einen ersten (32) und einen zweiten Teilstrom (34) derart, dass der erste Teilstrom (32) zwischen dem Staukörper (28) und der einen Seitenwand (12) des Gerinnes (10) und der zweite Teilstrom (34) zwischen dem Staukörper (28) und der anderen Seitenwand (14) des Gerinnes (10) an dem Staukörper (28) vorbei fließt.

3. Verfahren nach Anspruch 1 oder 2,
   **gekennzeichnet durch**
   Verändern eines zum Stauen wirksamen Querschnitts und/oder des Volumens des Staukörpers (28).

4. Verfahren nach Anspruch 3,
   **gekennzeichnet durch**

   a) Verwenden eines mittels eines Fluiddrucks ausdehnbaren Staukörpers (28) und Verändern des Fluiddrucks und/oder
   b) Verwenden eines Staukörpers (28) mit in unterschiedlichen Orientierungen unterschiedlichem wirksamen Stauquerschnitt und Ändern der Orientierung.

5. Verfahren nach einem der voranstehenden Ansprüche,
   **gekennzeichnet durch**
   mittiges Anordnen des Staukörpers (28) in dem Gerinne (10).

6. Verfahren nach einem der voranstehenden Ansprüche,
   **gekennzeichnet durch**
   Anordnen des Staukörpers (28) in einem Bereich von ca. 50 cm bis ca. 3 m hinter der Sieb- oder Recheneinrichtung (18).

7. Trennverfahren zum Absondern von Feststoffen aus einer Flüssigkeitsströmung mit:

   Leiten der Flüssigkeitsströmung durch eine in einem Gerinne (10) eingesetzte Sieb- oder Recheneinrichtung (18) und

Durchführen des Verfahrens nach einem der voranstehenden Ansprüche zum Einstellen des Pegels der Flüssigkeit im Bereich der Sieb- oder Recheneinrichtung (18).

8. Pegelstandsveränderungsvorrichtung (26) zum Verändern des Pegelstands in einem Gerinne (10) im Bereich einer Sieb- oder Recheneinrichtung (18), die durch eine Flüssigkeit zum Absondern von Feststoff daraus durchströmt wird, mit:

einem Staukörper (28) und einer Befestigungseinrichtung (30) zum Befestigen des Staukörpers (28) in Strömungsrichtung hinter der Sieb- oder Recheneinrichtung (18) entfernt von den Seitenwänden (12, 14) des Gerinnes (10), um die Flüssigkeitsströmung durch den Staukörper (28) in wenigstens einen ersten (32) und einen zweiten Teilstrom (34) derart aufzuteilen, dass der erste Teilstrom (32) zwischen dem Staukörper (28) und der einen Seitenwand (12) des Gerinnes (10) und der zweite Teilstrom (34) zwischen dem Staukörper (28) und der anderen Seitenwand (14) des Gerinnes (10) an dem Staukörper (28) vorbei fließt,
8.1 wobei der Staukörper (28) zur Veränderung des wirksamen Stauquerschnitts formveränderlich ist, und/oder
8.2 wobei der Staukörper (28) eine Form mit in unterschiedlichen Lagen und/oder Orientierungen unterschiedlichem wirksamen Stauquerschnitt hat und dass die Befestigungseinrichtung (30) einstellbar ist, um die Lage und/oder Orientierung des Staukörpers (28) zwecks Veränderung des wirksamen Stauquerschnitts zu verändern.

9. Pegelstandsveränderungsvorrichtung (26) nach Anspruch 8,
**dadurch gekennzeichnet,**
**dass** der Staukörper (28) mittels Einstellung eines Fluiddrucks im Inneren ausdehnbar oder zusammenziehbar ist und
**dass** die Pegelstandsveränderungsvorrichtung (26) eine Fluiddruckeinstelleinrichtung (36) zum Einstellen des Fluiddrucks im Inneren des Staukörpers (28) aufweist.

10. Trennvorrichtung (17) zum Absondern von Feststoff aus einer Flüssigkeitsströmung, mit
einer in einem Gerinne (10) anzuordnenden Sieb- oder Recheneinrichtung (18) und einer Pegelstandsveränderungsvorrichtung (26) nach einem der Ansprüche 8 oder 9.

# FIG 1

# FIG 2

FIG 3

Energielinie

$\frac{vR^2}{2g}$

$\Delta h_R$

$\frac{vu^2}{2g}$

$\Delta H$

$\alpha$

$vR$

$v0$

$H0$

$HR$

$W$

$\alpha'$

$vu$

$Hu$

EP 2 933 391 A1

## FIG 4

Q=f(delta H)

## FIG 5

Geschwindigkeit zwischen den Stäben

## FIG 6

Q= f(delta H)

## FIG 7

Geschwindigkeit zwischen den Stäben

FIG 8

FIG 9

Europäisches Patentamt
European Patent Office
Office européen des brevets

## EUROPÄISCHER RECHERCHENBERICHT

Nummer der Anmeldung

EP 15 15 7432

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 391 032 A (TEXACO LTD) 16. April 1975 (1975-04-16) | 8,10 | INV. E03F5/14 E02B7/00 |
| A | * Seite 2, Zeile 55 - Zeile 101; Abbildungen 1,2 * ----- | 1 | |
| A | US 2 929 504 A (LIND ARTHUR C ET AL) 22. März 1960 (1960-03-22) * Abbildung 1 * ----- | 1,8,10 | |
| X | GB 2 045 843 A (PIRELLI FURLANIS) 5. November 1980 (1980-11-05) * das ganze Dokument * ----- | 8 | |
| X | DE 12 97 039 B (IMBERTSON NORMAN M) 4. Juni 1969 (1969-06-04) * das ganze Dokument * ----- | 8,9 | |

RECHERCHIERTE SACHGEBIETE (IPC)

E03F
E02B

Der vorliegende Recherchenbericht wurde für alle Patentansprüche erstellt

| Recherchenort | Abschlußdatum der Recherche | Prüfer |
|---|---|---|
| München | 16. September 2015 | Flygare, Esa |

EPO FORM 1503 03.82 (P04C03)

Europäisches
Patentamt
European
Patent Office
Office européen
des brevets

Nummer der Anmeldung

EP 15 15 7432

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

```
Siehe Ergänzungsblatt B
```

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

EP 15 15 7432

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-10

   Trennvorrichtung zum Absondern von Feststoffen und ein Verfahren

1.1. Ansprüche: 8, 9

   Pegelstandsveränderungsvorrichtung

   ---

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

**ANHANG ZUM EUROPÄISCHEN RECHERCHENBERICHT**
**ÜBER DIE EUROPÄISCHE PATENTANMELDUNG NR.**                    EP 15 15 7432

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2015

| Im Recherchenbericht angeführtes Patentdokument | Datum der Veröffentlichung | Mitglied(er) der Patentfamilie | Datum der Veröffentlichung |
|---|---|---|---|
| GB 1391032 A | 16-04-1975 | KEINE | |
| US 2929504 A | 22-03-1960 | KEINE | |
| GB 2045843 A | 05-11-1980 | BE 882465 A1 | 16-07-1980 |
| | | DE 3012671 A1 | 16-10-1980 |
| | | FR 2453237 A1 | 31-10-1980 |
| | | GB 2045843 A | 05-11-1980 |
| | | IT 1188785 B | 28-01-1988 |
| | | JP S55148812 A | 19-11-1980 |
| | | LU 82337 A1 | 02-07-1980 |
| | | NL 8000694 A | 07-10-1980 |
| | | US 4310262 A | 12-01-1982 |
| DE 1297039 B | 04-06-1969 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1297039
- EP 1161292 B1
- DE 102007035081 A1
- DE 102010034098 A1
- DE 102011082629 A1
- DE 2921922 C2